(19) Europäisches Patentamt
European Patent Office
Office européen des brevets

(11) Publication number: **0 533 159 A1**

# (12) EUROPEAN PATENT APPLICATION

(21) Application number: **92115930.7**

(22) Date of filing: **17.09.92**

(51) Int. Cl.$^5$: **C08G 18/50**, C08G 18/08, C08G 18/12, C08G 18/32, C04B 41/48, D06M 15/576

(30) Priority: **17.09.91 IT MI912455**

(43) Date of publication of application: **24.03.93 Bulletin 93/12**

(84) Designated Contracting States: **AT BE CH DE DK ES FR GB GR IT LI LU NL PT SE**

(71) Applicant: **SYREMONT S.p.A.**
**31 Foro Buonaparte**
**I-20121 Milan(IT)**

(72) Inventor: **Cozzi, Ennio**
**5, via Montale**
**I-20020 Cantalupo, Milan(IT)**
Inventor: **Guidetti, Viviana**
**38, via Trento**
**I-20035 Lissone, Milan(IT)**
Inventor: **Palazzi, Sergio**
**18, via del Monivasco**
**I-22074 Lomazzo, Como(IT)**

(74) Representative: **Zumstein, Fritz, Dr. et al**
**Zumstein & Klingseisen Patentanwälte**
**Bräuhausstrasse 4**
**W-8000 München 2 (DE)**

## (54) Aqueous dispersions of fluorinated polyurethanes.

(57) Fluorinated polyurethanes having a high fluorine content and a high molecular weight have been prepared by polymerization in aqueous dispersion employing large quantities of perfluoro-polyether diol, inserting monomers having ionizable hydrophilic functional groups into the molecule and performing the dilution in $H_2O$ with an organic diamine.

The obtained fluorinated polyurethanes are employed in emulsion or as bulk dried products in the field of low temperatures and for treating buildings and stone and fibrous materials.

EP 0 533 159 A1

Field of the invention.

The present invention relates to aqueous dispersions of fluorinated polyurethanes having a high molecular weight and a high fluorine content, and their use in emulsion or as bulk dried products in the field of low temperatures, and for treating buildings and stone and fibrous materials.

In particular, the present invention relates to aqueous dispersions of fluorinated polyurethanes characterized by low values of glass transition temperature ($T_g \leqq -114°C$), by elastomeric properties and by excellent mechanical properties.

The use of such products in emulsion is preferred in particular in the field of building or of artistic goods, where they can be applied as protective and/or consolidating agents on stone and fibrous substrates.

Background of the invention.

Fluorinated polyurethanes obtained by polymerization in organic solvents and having elastomeric properties are known (European Patent Application No. 0,359,272).

However, the low molecular weight of such elastomers does not allow to obtain materials having a good balance of mechanical properties such as hardness, ultimate tensile strength, elastic modulus, elongation. In particular, the hardness values of these known products are comprised between 50 and 80 Shore A, while the ultimate tensile strength is between 31 and 76 $Kg/cm^2$.

In U.S. Patent 4,983,666, a method for the preparation of aqueous dispersions of fluorinated polyurethanes having a low fluorine content (4-4.5%), used in the textile field, is described. These fluorinated polyurethanes, however, because of the low amount of fluorine contained therein (max 15%), are not suitable for the applications which require high chemical resistance, smoothness and resistance to light.

Object of the present invention is obtaining aqueous dispersions of fluorinated polyurethanes having a glass transition temperature lower than -114°C, high molecular weight and high fluorine content, in order to achieve improved mechanical and chemical characteristics with respect to those known in the art.

The preparation of fluorinated polyurethanes having high molecular weight and high fluorine content has not been possible so far also because of experimental problems which have been encountered. In fact, polyurethanes having a high fluorine content are characterized by a very low solubility in organic solvents and in water; therefore during the polymerization process they tend to precipitate, subtracting themselves from the growing process. As a consequence, in order to avoid phase separation phenomena during the reaction, it is possible to operate at the most with 50% by weight of solvent, thus reaching very high viscosities, which impede a further polymer growth.

Description of the invention.

It has now been found by the Applicant that fluorinated polyurethanes having a high molecular weight and a high fluorine content can be obtained in the form of aqueous dispersions using even a large quantity of perfluoropolyether diol, by inserting monomers having ionizable hydrophilic functional groups into the molecule and performing the dilution in $H_2O$ with an organic diamine.

Therefore, object of the present invention are stable aqueous dispersions of fluorinated polyurethanes containing in the macromolecule hydrophilic ionic groups, of anionic and cationic type, obtained according to the following steps:

a) preparation of a fluorinated polyisocyanate by reacting an organic diisocyanate with a mixture of diols containing ionizable groups, macroglycols comprising polyols, and at least 35% by weight of one or more hydroxy-ended fluoropolyethers;

b) salification of the so obtained fluorinated polyisocyanate in order to change the ionizable groups into hydrophilic cationic or anionic groups;

c) dispersion in water of the salified fluorinated polyisocyanate; and

d) reaction of the fluorinated polyisocyanate with an organic diamine.

According to the present invention, the molar ratio between isocyanic groups and the total sum of hydroxylic groups is comprised between 1.2 and 2, and preferably is 1.5.

The hydroxy-ended fluoropolyethers are employed in an amount higher than 35% by weight, calculated with respect to macroglycols. In particular, amounts ranging from 40% and 70% are preferred.

The preparation of the aqueous dispersion of fluorinated polyurethanes according to the present invention is carried out in the presence of organic solvents selected from cellosolve acetate, acetone, tetrahydrofuran, methylethylketone, methoxypropanol acetate, etc.

The reaction temperature is lower than 100 ° C, preferably it ranges from 50 to 90 ° C.

The reactions can be carried out in the presence of catalysts known in the art, such as organometallic compounds or tertiary amines. Suitable catalysts are, for instance: dibutyl-tin-dilaurate, tin-octanoate, cobalt-naphthenate, vanadium-acetylacetonate, dimethyl-tin-diethylhexanoate and mixtures thereof, triethyl-diamine, tetramethyl guanidine, dimethyl-cycloexyl-amine, etc., among which triethylenediamine and dibutyl-tin-dilaurate are preferred.

Such catalysts are employed in catalytic concentrations and preferably not higher than 0.1% by weight.

The organic diisocyanates suitable for the preparation of the aqueous dispersions according to the present invention have the general formula:

OCN - R - NCO

wherein R is selected from alkylenic, cycloalkylenic, alkylenic-cycloalkylenic or arylenic radicals having from 1 to 20 carbon atoms.

Suitable isocianates are, for instance: 2,4-toluendiisocyanate, 4,4'-diphenyl-methanediisocyanate, 4,4'-dicyclohexyl-methanediisocyanate; 1-isocyanate-3-isocyanatemethyl-3,5,5-trimethyl-cyclohexane (or isophoronediisocyanate); 2,2,4-trimethyl-hexamethylenediisocyanate in mixture with 2,4,4-trimethyl-hexamethylenediisocyanate isomer, ethylidene-di-isocyanate, butylen-diisocyanate, pentamethylenediisocyanate, hexamethylen-diisocyanate, cyclopentyl(en)-1,3-diisocyanate, cyclohexyl(ene)-1,4-diisocyanate, cyclohexyl(en)-1,2-diisocyanate, xylilen-diisocyanate, dichloro-hexamethylenediisocyanate, dicyclo-hexyl-4,4'-diisocyanate, 1,2-di(isocyanatemethyl)-cyclobutane, 1-methyl-2,4-diisocyanate-cyclohexane, 1-methyl-2,6-diisocyanate-cyclohexane, etc.; aliphatic diisocyanate containing ethereal groups such as 1,3-bis-($\gamma$ -isocyanatepropoxy)-2,2-dimethyl-propane, etc. Among them, asymmetric aliphatic diisocyanates, such as isophorone-diisocyanate, are preferred.

Preferably, suitable ionizable diols are those which are able to impart an anionic charge to the polyurethane macromolecule, because in that case the final compounds are compatible with auxiliary products, such as pigments, dyes and aqueous dispersions of different nature (for instance, acrylic, vinylic, butadiene-acrylonitrilic dispersion), which are all of anionic nature.

Usually, suitable ionizable diols are those containing a free carboxyl group, preferably bound to the same carbon atom having the two hydroxyl groups, for instance dimethylolacetic acid, dimethylolpropionic acid, dimethylolbutyrric acid, etc.

Furthermore, suitable compounds are those containing at least two hydroxyl groups and a carboxyl group not bound to the same carbon atom, such as for instance the semi-esterification products of triols with aliphatic bicarboxyl anhydrides.

The cationic-type aqueous dispersions can be obtained by using, as ionizable diols, already known tertiary alkyldialkanolamines, such as for instance methyldiethanolamine, butyldiethanolamine, methyldiisopropanolamine, etc.

The macroglycols employed for the preparation of the aqueous dispersions of the present invention comprehend polyols and hydroxy fluoropolyethers.

Suitable polyols have a molecular weight comprised between 500 and 5000, preferably between 800 and 3000, and are selected from saturated polyesters, polyethers, polyester-urethanes, polyether-urethanes, polyurethane-amides.

Examples of suitable polyesters are the polycondensation products of anhydrides or bicarboxylic acids, preferably aliphatic, having from 4 to 9 carbon atoms, such as succinic, adipic, sebacic, azelaic anhydrides or acids, with aliphatic diols having 2-8 carbon atoms, alone or in mixture, such as ethylene glycol, the polycondensation products of $\epsilon$-caprolactone on diol "starters", etc.

Examples of suitable polyester-urethanes are the polyaddition products of the polyesters cited above with organic diisocyanates in a molar defect.

Examples of suitable polyethers are the various kinds of polyethyleneglycol, polypropyleneglycol, and, preferably, the polymerization products of tetrahydrofuran.

The polyols cited above can be used in combination with small amounts of low molecular weight polyols, preferably of the trifunctional type, such as trimethylolpropane, glycerine, 1,2,6-hexantriol, etc.

The hydroxy-ended fluoropolyethers have molecular weight comprised between 500 and 7000, preferably between 1000 and 2500, and are selected from those of the general formulas:

$$Y\text{-}R_1\text{-}CF_2\text{-}O\text{-}(C_2F_4O)_m\text{-}(CF_2O)_n\text{-}CF_2\text{-}R_1\text{-}Y \qquad (I)$$

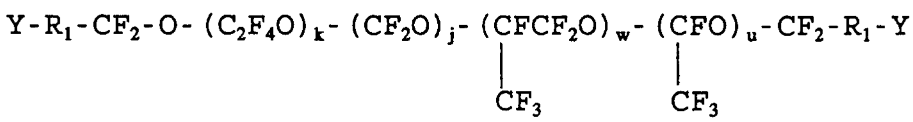 (II)

$Y-R_1-CF_2-O-(C_3F_6O)_d-CF_2-R_1-Y$ (III)

$Y-R_1-CF_2-(OC_2F_4CH_2)_b-OR_fO-(CH_2C_2F_4O)_b-CF_2-R_1-Y$ (IV)

$Y-R_1-CF_2-O-(C_2F_4O)_r-CF_2-R_1-Y$ (V)

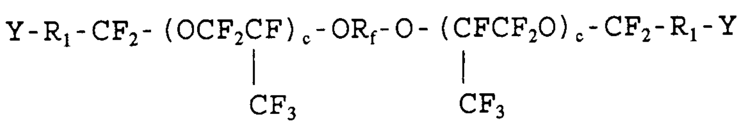 (VI)

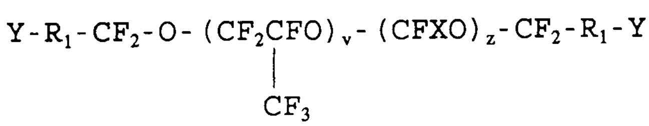 (VII)

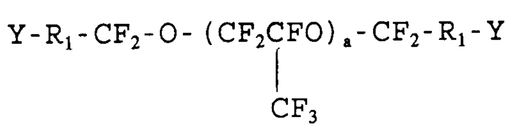 (VIII)

$Y-R_1-CF_2-(OCF_2CF_2CH_2)_g-O-CF_2-R_1-Y$ (IX)

where $R_1$ is selected from: $-(CH_2)_x-$, $-(CH_2O)_yCH_2-$, $-(CH_2)_xOCH_2-$, $-CH_2-(OCH_2CH_2)_z-$, wherein x and y are integers ranging from 1 to 4; m and n are integers with a m/n ratio ranging from 0.2 to 2, preferably from 0.5 and 1.2; z is an integer ranging from 0 and 3; $R_f$ is a perfluoroalkylenic radical, X is F or $CF_3$; Y is a -OH and/or -COOH group; k, j, w, u, d, b, r, c, v, z, a, g are integers such as to give the molecular weights mentioned above.

The fluoropolyethers of the general formulas from (I) to (IX) are obtained according to the precesses described in US Patents 3,242,218, 3,665,041, 3,250,808, 3,810,874 and 4,523,039 and in European Patent Applications 148,482, 151,877, 165,649 and 165,650.

Among the hydroxy-ended fluoropolyethers, $\alpha, \omega$ -bis(hydroxymethyl)polyoxyperfluoroalkylene having an average molecular weight of 2000, produced and commercialized by Montefluos S.p.A., under the tradename Fomblin® Z DOL 2000, is preferred.

The salification of the anionic or cationic-type fluorinated polyisocyanate is preferably carried out in the melted state, by simply adding the salifying agent as such or dissolved in water and/or solvents at a temperature of about 90°C; should the melted polyisocyanate have a too high viscosity at this temperature, it can be suitably diluted with solvents, before the salification step.

The salification of the anionic-type polyisocyanate can be carried out preferably by using salifying agents selected from inorganic bases such as sodium or ammonium hydroxyde and tertiary amines or alkanolamines such as triethylamine, dimethyl-ethanolamine, methyl-diethanolamine, etc.

For the salification of the cationic-type polyisocyanate, organic and/or inorganic acids can be used, such as hydrochloric, phosphoric, formic, lactic, acetic acid and so on.

According to the present invention, in the heterogeneous phase reaction for the preparation of the aqueous dispersions of fluorinated polyurethanes, any organic diamine can be used.

The diamine can be used in such an amount that the ratio between the equivalent concentrations of amine and isocyanate groups ($NH_2$/NCO) is comprised between 0.5 and 1, and preferably between 0.8 and 1.

The aqueous dispersions according to the present invention have a solid content higher than 20% by weight, preferably between 30 and 50% by weight.

The intrinsic viscosity values of the final products range from 0.3 and 1.5 dl/g, which roughly correspond, by extrapolation, to a molecular weight around hundreds of thousands of atomic mass units

(a.m.u.).

The stable aqueous dispersions of fluorinated polyurethanes according to the present invention can be used as protective and/or consolidating agents in the treatment of stone and fibrous materials, of plasters and cements, exerting a hydrophobic and cohesive action.

The aqueous dispersions can be used in a concentration of from 0,5 to 20% by weight, preferably from 1 and 5% by weight. As diluent, it is possible to use water or other water-soluble organic solvents, such as, for instance, alcohols, ketones, esters, glycoethers.

When the aqueous dispersions are used as coatings, the removal of the little amount of solvent (about 7.5%) present in the dispersion is generally not necessary; on the contrary, solvents in the dispersion can exert a coalescent effect, favouring the formation of more homogeneous films, having, by consequence improved performances.

When, on the contrary, bulk-fluorinated polyurethanes are used, these products must be dried anyway; the contemporaneous removal of solvents and water from the dispersions can be carried out by heating.

The fluorinated polyurethanes prepared in aqueous dispersion according to the present invention are plasto-elastomers, and are endowed with a high molecular weight and a high fluorine content. Therefore, the process in dispersion according to the present invention leads to the formation of plasto-elastomeric products endowed with superior characteristics with respect to those disclosed in European Patent Application 0,359,272 and in US Application 4,983,666.

Because of the high fluorine content, which can reach 50% by weight, the obtained plasto-elastomers have a low friction coefficient, are easily hot processed, e.g. by moulding, and have exceptional characteristics at very low temperatures.

The present invention will be better described by the following working examples, which are given only for exemplifying purposes and cannot be construed as limitative of the scope of the invention itself.

The fluorinated polyurethanes prepared in the examples have been tested according to the following specifications:

| | |
|---|---|
| - hardness (Shore A) | ASTM 2240 |
| - yield tensile strength ($\sigma$) | ASTM D 412 |
| - ultimate tensile strength ($\sigma$) | ASTM D 412 |
| - tensile elongation | ASTM D 412 |
| - $T_g$ (glass transition temperature) | by D.S.C. |
| - contact angle | ATICELCA.MC21-72 |

EXAMPLE 1.

Into a reactor equipped with stirrer, thermometer, reflux condenser, heating and cooling device, 160 g of $\alpha$, $\omega$ -bis(hydroxymethyl)polyoxyperfluoroalkylene having an average molecular weight of 2000 (Fomblin® Z-DOL 2000), 53.4 g of isophoronediisocyanate and 63 g of Dowanol® PMA (methoxy propanol acetate) are loaded.

After heating to 40 °C, keeping on stirring, 0.15 ml of DABCO® T12 CL (dibutyl-tin-dilaurate) are added, and the reaction mixture is slowly heated up to 70-75 °C. The temperature is kept constant by controlling the heat evolved during reaction, until a free isocyanate group (NCO) concentration of 5% is reached. The reaction mixture is then cooled to 55 °C, and 8.58 g of dimethylolpropionic acid and 46.4 g of polyoxytetramethylenglycol having an average molecular weight of 2900 (Terathane® 2900) are added.

The temperature is brought to 75 °C and the mixture is allowed to react until a free isocyanate group (NCO) content of 1.9% is obtained.

The reaction mixture is cooled to 35 °C, and 6.64 g of TEA (triethylamine) and 410 g of deionized water are added. Finally, 12.7 g of isophoronediamine dissolved in 100 g of deionized water are dropped in about 5 minutes. At the end, the dispersion is allowed to react for further 10 minutes. A fluid product, having a dry solid content of 31. 1% and a fluorine content of 36.2% (in perfluoropolyether 57.5%), is obtained. The obtained results are reported in Table 1.

EXAMPLE 2.

The procedure of Example 1 is followed until the product containing 5% by weight of free isocianyate groups is obtained.

The reaction mixture is then cooled to 55 °C, and 8.58 g of dimethylolpropionic acid and 6.8 g of polypropyleneglycol having molecular weight 425 are added.

The mixture is heated to 75 °C and allowed to react until a free isocyanic group content (NCO) of 2.3% is obtained.

After cooling to 35 °C, 6.46 g of TEA and 410 g of deionized water are added, and 10.06 g of polyethoxyethylenediamine having molecular weight 148 (Jeffamina® EDR 148), dissolved in 100 g of deionized water, are dropped.

The so obtained product has a dry content of 30.4% and a fluorine content of 42.2% (of perfluoropolyether 67%).

The obtained results are reported in Table 1.

EXAMPLE 3

The same procedure of Example 2 is followed, with the only difference that polypropyleneglycol is substituted by 16 g of polyoxytetramethyleneglycol having average molecular weight 1000 (Terathane® 1000).

In this case, the free isocyanic group (NCO) content before the emulsification with water is 2.13% with respect to the starting product.

The so obtained product has a dry content of 30.2% and a fluorine content of 40. 7% (of perfluoropolyether 64. 5%).

The so obtained results are reported in Table 1.

EXAMPLE 4 (comparative).

In order to evaluate the influence of the fluorinated polyurethane molecular weight on the characteristics of the final products, Example 20 of European Patent Application 0,359,272 is repeated and the mechanical properties of the obtained product are tested (Shore hardness A, ultimate tensile strenght, elongation). These results show that the fluorinated polyurethanes obtained according to the present invention have superior mechanical properties with respect to those described in the prior art.

The obtained results are reported in Table 1. In this table, intrinsic viscosity values are reported, from which the molecular weight can be determined.

**Table 1**

| Properties | Unit of measure | EXAMPLE | | | |
|---|---|---|---|---|---|
| | | 1 | 2 | 3 | 4 |
| Solid content | % | 31,10 | 30,40 | 30,13 | 50 |
| Fluorine | % | 36,20 | 42,20 | 40,65 | 51 |
| pH | - | 8,28 | 8,24 | 8,25 | - |
| acidit No. | mg KOH/g | 4,73 | 4,86 | 5,36 | - |
| Brookfield* viscosity | mPa.s | 46 | 31,50 | 29 | n.d.*** |
| Intrinsic** viscosity | dl/g | 1,3 | 0,45 | 0,43 | 0,1 |
| $T_g$ | °C | -115 | -114 | -115 | -115 |
| Contact angle | ° | 107 | 104 | 103 | n.d.**** |
| Surf. tension (25°C) | dyne/cm | 36,30 | 25 | 24 | n.d.**** |
| Shore hardness A | - | 96 | 96 | 95 | 65 |
| σ Yielding | $kg/cm^2$ | 90 | 130 | 77 | - |
| σ Breaking | $kg/cm^2$ | 272 | 234 | 210 | 81 |
| Elongation | % | 540 | 500 | 560 | 840 |

* at a temperature of 25°C;
** in 1,1,1-trifluoroethanol; at a temperature of 25°C.
n.d.*** not determinable (too high).
n.d.**** not determinable (the obtained product is not dilutable).

APPLICATIVE EXAMPLES.

Use of fluorinated polyurethanes as thermoplastic materials for molding, having a high chemical and physico-mechanical resistance at low temperatures.

EXAMPLE 5.

200 g of the dispersion prepared according to Example 1 are poured into a PTFE-coated capsule and put into an air circulation oven at 60 °C; after about 10 hours, a thin layer of dry, tough polymer is obtained, which is stable at room temperature for an indefinite time.

EXAMPLE 6.

30 g of product obtained according to Example 5 are are minced and molded in a heated press, in order to obtain a 120x120x0.8 µm little plate. The molding conditions are: T = 165 °C, p = 40 Kg/cm$^2$.

The product has the following characteristics:

| | |
|---|---|
| Shore hardness A | 96 |
| σ yielding | 90 Kg/cm$^2$ |
| σ breaking | 272 Kg/cm$^2$ |
| Tensile elongation | 540 % |
| $T_g$ | -115 °C |
| Contact angle | 107 ° |

EXAMPLE 7.

The procedure described in Example 5 is followed, using the product obtained in Example 2, and molding it at 150 °C and 40 Kg/cm$^2$.

The obtained product has the following characteristics:

| | |
|---|---|
| Shore hardness A | 96 |
| σ yielding | 130 Kg/cm$^2$ |
| σ breaking | 234 Kg/cm$^2$ |
| Tensile elongation | 500 % |
| $T_g$ | -114 °C |
| Contact angle | 104 ° |

EXAMPLE 8.

The procedure described in Example 5 is followed, using the product obtained in Example 3, and molding it at 150 °C and 40 Kg/cm$^2$.

The obtained product has the following characteristics:

| | |
|---|---|
| Shore hardness A | 95 |
| σ yielding | 77 Kg/cm$^2$ |
| σ breaking | 210 Kg/cm$^2$ |
| Tensile elongation | 560 % |
| $T_g$ | -115 °C |
| Contact angle | 103 ° |

The following examples refer to the use of fluorinated polyurethanes as protective agents for stone materials (stones, cements, plasters) (Ex.9) and for fibrous materials (paper and wood) (Ex.10).

EXAMPLE 9.

The products obtained according to Examples 1 and 2 are tested as protecting agents for stone surfaces, in particular "pietra serena" (average porosity 8.5%).

These products are diluted with ethanol to obtain solutions containing 1.5% by weight of dry polymer, and then they are applied by means of a brush on the upper side of a suitable specimen.

To determine the features reported in Table 2, the specimens are kept at room temperature for 3 days and then in a circulating air oven at 60 ° C until constant weight is achieved.

TABLE 2.

| Features (5x5x2 cm specimens) | Unit of measure | Untreated | Treated | |
|---|---|---|---|---|
| | | | Ex.1 | Ex.2 |
| Coating | $g/m^2$ | -- | 15 | 18 |
| Capillary absorption [1] | $g/m^2$ | 20 | 4 | 4 |
| Protective efficiency [2] | % | -- | 90 | 90 |
| Reversibility [3] | % | -- | 52 | 42 |

TABLE 2 (Cont).

| Features (5x5x1 cm specimens) | Unit of measure | Untreated | Treated | |
|---|---|---|---|---|
| | | | Ex.1 | Ex.2 |
| Coating | $g/m^2$ | -- | 14 | 10 |
| Permeability [4] | $g/m^2.24h$ | 145 | 85 | 95 |
| Contact angle [5] | ° | n.d. | 117 | 42 |

[1] : NORMAL 11/85

[2] : (Abs. untreated - Abs. treated)/(Abs. untreated) x 100 after 30 minutes in contact with water

[3] : in methanol/Delifrene(R) 2:3 at 25°C for 24 hours

[4] : NORMAL 21/85

[5] : NORMAL F1 89/60

n.d.: non-determinable.

EXAMPLE 10.

The products obtained according to Examples 1 and 2 are tested as protecting and consolidating agents for uncoated pure cellulose paper.

The products are diluted with water up to a concentration of 10% by weight of dry polymer, and then applied by immersion impregnation. After 1 minute, the specimens are roll wringed to remove the excess

product.

The characteristics of the treated and untreated paper specimens are determined after a seven-day conditioning at 23 ° C and at 50% of relative humidity.

The obtained results are reported in Table 3.

Table 3

| Feature | Unit of measure | Untreated | Treated | |
|---|---|---|---|---|
| | | | Ex.1 | Ex.2 |
| Coating | $g/m^2$ | -- | 11.2 | 10.5 |
| Folding endurance * | No. | 7 | 100 | 150 |
| Tensile strength | $N/mm^2$ | 7 | 14 | 14 |
| Elongation | % | 4 | 7 | 7 |
| Water column resistance | mm | < 1 | 345 | 485 |
| Contact angle | ° | n.d. | 113 | 117 |

* : TAPPI 423 OM 84; unit: No. of cycles
n.d.: non-determinable.

## Claims

1. Stable aqueous dispersions of fluorinated polyurethanes having a high molecular weight and a high fluorine content and containing in the macromolecule hydrophilic ionic groups, of anionic or cationic nature, obtained according to the following steps:
   a) preparation of a fluorinated polyisocyanate by reacting an organic diisocyanate with a mixture of diols containing ionizable groups, of macroglycols comprising polyols, and at least 35% by weight of one or more hydroxy-ended fluoropolyethers;
   b) salification of the so obtained fluorinated polyisocyanate in order to change the ionizable groups into hydrophilic cationic or anionic groups;
   c) dispersion in water of the salified fluorinated polyisocianate; and
   d) reaction of the fluorinated polyisocyanate with an organic diamine.

2. Aqueous dispersions according to claim 1, wherein the hyroxy- and/or carboxy-ended fluoropolyethers are selected from those of the general formulas:

$$Y\text{-}R_1\text{-}CF_2\text{-}O\text{-}(C_2F_4O)_m\text{-}(CF_2O)_n\text{-}CF_2\text{-}R_1\text{-}Y \quad (I)$$

$$Y\text{-}R_1\text{-}CF_2\text{-}O\text{-}(C_2F_4O)_k\text{-}(CF_2O)_j\text{-}(\underset{\displaystyle CF_3}{\underset{|}{C}}FCF_2O)_w\text{-}(\underset{\displaystyle CF_3}{\underset{|}{C}}FO)_u\text{-}CF_2\text{-}R_1\text{-}Y \quad (II)$$

$$Y\text{-}R_1\text{-}CF_2\text{-}O\text{-}(C_3F_6O)_d\text{-}CF_2\text{-}R_1\text{-}Y \quad (III)$$

$$Y\text{-}R_1\text{-}CF_2\text{-}(OC_2F_4CH_2)_b\text{-}OR_fO\text{-}(CH_2C_2F_4O)_b\text{-}CF_2\text{-}R_1\text{-}Y \quad (IV)$$

$$Y\text{-}R_1\text{-}CF_2\text{-}O\text{-}(C_2F_4O)_r\text{-}CF_2\text{-}R_1\text{-}Y \quad (V)$$

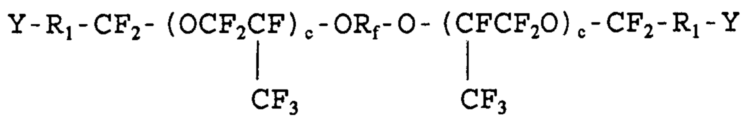
(VI)

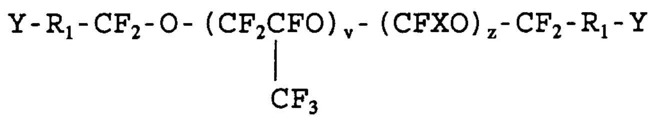
(VII)

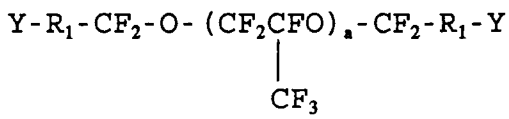
(VIII)

$Y\text{-}R_1\text{-}CF_2\text{-}(OCF_2CF_2CH_2)_g\text{-}O\text{-}CF_2\text{-}R_1\text{-}Y$ (IX)

where $R_1$ is selected from: $-(CH_2)_x-$, $-(CH_2O)_yCH_2-$, $-(CH_2)_xOCH_2-$, $CH_2-(OCH_2CH_2)_z-$, wherein x and y are integers ranging from 1 to 4; m and n are integers with a m/n ratio ranging from 0.2 to 2, preferably from 0.5 and 1.2; z is an integer ranging from 0 and 3; $R_f$ is a perfluoroalkylenic radical, X is F or $CF_3$; Y is a -OH and/or -COOH group; k, j, w, u, d, b, r, c, v, z, a, g are integers such as to give the molecular weights mentioned above.

**3.** Aqueous dispersions according to claim 1 or 2, wherein the hydroxy- and/or carboxy-ended fluoropolyethers are α, ω -bis(hydroxymethyl)polyoxperfluoroalkylene and the α, ω -(polyoxyperfluoalkane)dioic having an average molecular weight of 2000.

**4.** Aqueous dispersions according to any of the preceding claims, wherein the molar ratio between isocyanic groups and the sum of hydroxy groups is of from 1.2 to 2, preferably is 1.5.

**5.** Aqueous dispersions according to any of the preceding claims, wherein the macroglycols comprise from 40 to 70% by weight of one or more hydroxy-ended fluoropolyethers.

**6.** Aqueous dispersions according to anyone of the preceding claims, wherein the hydroxy-ended fluoropolyethers have a molecular weight of from 500 to 7000, preferably from 1000 to 2500.

**7.** Aqueous dispersions according to any of the preceding claims, wherein the preparation of the fluorinated polyisocyanate is carried out in the presence of an organic solvent.

**8.** Aqueous dispersions according to claim 7, wherein the organic solvent is methoxypropanol acetate.

**9.** Aqueous dispersions according to any of the preceding claims, wherein the obtained fluorinated polyurethanes have intrinsic viscosity values of from 0.3 to 1.5 dl/g.

**10.** Aqueous dispersions according to any of the preceding claims, wherein the obtained fluorinated polyurethanes contain in the macromolecule ionic groups in an amount of from 10 to 60, preferably from 20 to 40, milliequivalents per 100 grams of dry polymer.

**11.** Aqueous dispersions according to any of the preceding claims, wherein an organic diamine is used in such an amount that the ratio between equivalent concentrations of amine groups and of isocyanate groups ($NH_2/NCO$) is comprised between 0.5 and 1, preferably between 0.80 and 1.

**12.** Use of the aqueous dispersions according to any of the preceding claims as protecting and/or consolidating agents in the field of building and for stone and fibrous materials.

**13.** Use of the aqueous dispersions according to any of the preceding claims as bulk thermoplastic materials.

**14.** Use of the aqueous dispersions according to any of the preceding claims for the preparation of manufactured articles to be used at low temperatures.

European Patent Office

# EUROPEAN SEARCH REPORT

Application Number

EP 92 11 5930

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y<br><br><br>D | EP-A-0 273 449 (AUSIMONT S.P.A.)<br>* claims 1-6,11 *<br>* page 3, line 5 - line 57 *<br>& US-A-4 983 666<br>--- | 1-4 | C08G18/50<br>C08G18/08<br>C08G18/12<br>C08G18/32<br>C04B41/48<br>D06M15/576 |
| Y | EP-A-0 339 862 (I.C.I.)<br>* claims 1-4,9 *<br>* page 3, line 48 - page 4, line 1 *<br>* page 5, line 15 - line 48 *<br>* page 6, line 19 - line 54 *<br>* page 7, line 1 - line 15 *<br>--- | 1-4 | |
| A | EP-A-0 430 266 (SYREMONT S.P.A.)<br>* claims 1,4,8-10 *<br>* page 4, line 46 - page 5, line 13 *<br>--- | 1,12 | |
| A | US-A-4 895 894 (S.H. RUETMAN ET AL.)<br>* claims 1-6,9-11 *<br>* column 11, line 40 - line 50 *<br>--- | 1 | |
| A | EP-A-0 407 968 (DOW)<br>* claims 1,2 *<br>* column 4, line 47 - column 5, line 11 *<br>* column 9, line 57 - column 10, line 10 *<br>* column 13, line 46 - column 14, line 10 *<br>* column 16, line 37 - column 17, line 20 *<br>----- | 1 | TECHNICAL FIELDS SEARCHED (Int. Cl.5 )<br>C08G<br>C04B<br>D06M |

The present search report has been drawn up for all claims

| Place of search | Date of completion of the search | Examiner |
|---|---|---|
| THE HAGUE | 05 JANUARY 1993 | VAN PUYMBROECK M. A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document